(19) Europäisches Patentamt
European Patent Office
Office européen des brevets

(11) **EP 1 667 363 A1**

(12) **EUROPEAN PATENT APPLICATION**

(43) Date of publication:
07.06.2006 Bulletin 2006/23

(51) Int Cl.:
*H04L 12/26* (2006.01)

(21) Application number: 05111665.5

(22) Date of filing: 02.12.2005

(84) Designated Contracting States:
AT BE BG CH CY CZ DE DK EE ES FI FR GB GR
HU IE IS IT LI LT LU LV MC NL PL PT RO SE SI
SK TR
Designated Extension States:
AL BA HR MK YU

(30) Priority: 02.12.2004  US 632656 P

(71) Applicant: AT&T Corp.
New York, NY 10013-2412 (US)

(72) Inventors:
• Cormode, Graham
Summit,
New Jersey 07901 (US)

## Description

This application claims the benefit of U. S. Provisional Application No. 60/632,656 filed on December 2, 2004, which is herein incorporated by reference.

The present invention relates generally to communication networks and, more particularly, to a method for monitoring data streams in packet networks such as Internet Protocol (IP) networks.

## BACKGROUND OF THE INVENTION

The Internet has emerged as a critical communication infrastructure, carrying traffic for a wide range of important applications. Internet services such as Voice over Internet Protocol (VoIP) are becoming ubiquitous and more and more businesses and consumers are relying on these IP services to meet their voice and data service needs. In turn, service providers must maintain a level of services that will meet the expectation of their customers.

As such, service providers of communication networks may deploy one or more network monitoring devices to monitor data streams for purposes such as performance monitoring, anomalies detection, security monitoring and the like. Unfortunately, the enormous amount of data that traverses through such networks would require a substantial amount of computational resources to monitor a never ending (e.g., online) stream of data. Thus, network monitoring devices must adopt data stream management methods that are efficient and capable of processing a large amount of data in the least amount of time while minimizing space usage, e.g., memory or storage space usage.

Therefore, there is a need for a method and apparatus for performing data stream monitoring that reduces computational time and space usage.

## SUMMARY OF THE INVENTION

In one embodiment, the present invention discloses a method and apparatus for computing quantiles. For example, the present invention reads a plurality of items from a data stream and inserts each of the plurality of items that was read from the data stream into a data structure. Periodically, the data structure is compressed to reduce the number of stored items in the data structure. In turn, the compressed data structure can be used to output a biased or targeted quantile.

## BRIEF DESCRIPTION OF THE DRAWINGS

The teaching of the present invention can be readily understood by considering the following detailed description in conjunction with the accompanying drawings, in which:

FIG. 1 illustrates an exemplary network related to the present invention;

FIG. 2 illustrates a method for computing a biased quantile;

FIG. 3 illustrates an exemplary pseudocode of the present method for computing biased quantiles;

FIG. 4 illustrates a plot of an invariant f in one embodiment of the present invention; and

FIG. 5 illustrates a high-level block diagram of a general-purpose computer suitable for use in performing the functions described herein.

To facilitate understanding, identical reference numerals have been used, where possible, to designate identical elements that are common to the figures.

## DETAILED DESCRIPTION

The present invention broadly discloses a method and apparatus for data stream monitoring of IP traffic. More specifically, the present invention discloses an efficient method for computing biased quantiles over data streams.

Skew is prevalent in many data sources such as IP traffic streams. Distributions with skew typically have long tails which are of great interest. For example, in network management, it is important to understand what performance users experience. One measure of performance perceived by the users is the round trip time (RTT) (which in turn affects dynamics of the network through mechanisms such as Transmission Control Protocol (TCP) flow control). RTTs display a large amount of skew: the tails of the distribution of round trip times can become very stretched. Hence, to gauge the performance of the network in detail and its effect on all users (not just those experiencing the average performance), it is important to know not only the median RTT but also the 90%, 95% and 99% quantiles of TCP round trip times to each destination. In developing data stream management systems that interact with IP traffic data, there exists the facility for posing such queries. However, the challenge is to develop approaches to answer such queries efficiently and accurately given that there may be many destinations to track. In such settings. the data rate is typically very high and resources are limited in comparison to the amount of data that is observed. Hence it is often necessary to adopt the data stream methodology: analyze IP packet headers in one pass over the data with storage space and total processing time that is significantly sublinear in the size of the input.

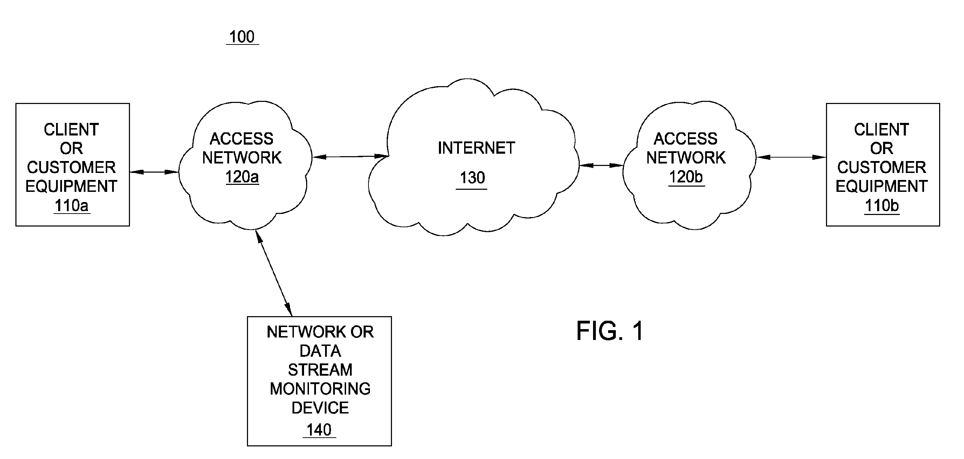

FIG. 1 illustrates an exemplary IP network 100 of the present invention. In this simplified example, client or customer equipment 110a uses access network 120a to reach the Internet 130. In turn, the internet is coupled to another access network 120b that communicates with another client or customer equipment 110b. In this example, client 110a may communicate with client 110b via the two access networks and the Internet. One measure of the network performance is the round trip time that is experienced by the two clients. To monitor such network performance, a network or data stream monitoring device 140 can be deployed to monitor data streams. In one embodiment, the present method for computing quantiles can be implemented in the network or data stream monitoring device 140 for performing data stream monitoring functions as discussed in greater details below.

In one embodiment, IP traffic streams and other streams are summarized using quantiles: these are order statistics such as the minimum, maximum and median values. In a data set of size $n$, the $\phi$-quantile is the item with rank $\lceil \phi n \rceil$[1]. The minimum and maximum are easy to calculate precisely in one pass but exact computation of certain quantiles can require space linear in $n$. So the notion of $\varepsilon$-approximate quantiles relaxes the requirement to finding an item with rank between $(\phi - \in)n$ and $(\phi + \in)n$. Much attention has been given to the case of finding a set of uniform quantiles: given $0 < \phi < 1$, return the approximate $\phi$, $2\phi$, $3\phi$, ... , $\lfloor 1/\phi \rfloor \phi$ quantiles of a stream of values. Note that the error in the rank of each returned value is bounded by the same amount, en; we call this the uniform error case.

However, summarizing distributions which have high skew using uniform quantiles is not always informative because it does not describe the interesting tail region. adequately. In contrast, the present invention discloses the method of high-biased quantiles: to find the $1 - \phi$, $1 - \phi^2$, $1 - \phi^3$, ... , $1 - \phi^k$ quantiles of the distribution. In order to give accurate and meaningful answers to these queries, the present method also scales the approximation factor $\varepsilon$ so the more biased the quantile, the more accurate the approximation should be. The approximate low-biased quantiles should now be in the range $(1-(1\pm\varepsilon)\phi^j)n$: instead of additive error in the rank $\pm\in n$, we now require relative error of factor $(1 \pm \in)$.

Finding high- (or low-) biased quantiles can be seen as a special case of a more general problem of finding targeted quantiles. Rather than requesting the same $\in$ for all quantiles (e.g., the uniform case) or $\in$ scaled by $\phi$ (the biased case), one might specify in advance an arbitrary set of quantiles and the desired errors of $\in$ for each in the form $(\phi_j, \varepsilon_j)$. For example, input to the targeted quantiles problem might be $\{(0.5, 0.1), (0.2, 0.05), (0.9, 0.01)\}$, meaning that the median should be returned with 10% error, the 20th percentile with 5% error, and the 90th percentile with 1 %.

Both the biased and targeted quantiles problems could be solved trivially by running a uniform solution with $\in = \min_j \in_j$. But this is wasteful in resources since there is no need for all of the quantiles with such fine accuracy. In other words, the present method would like solutions which are more efficient than this naive approach both in terms of memory used as well as in running time, thereby adapting to the precise quantile and error requirements of the problem.

To better under the present invention, the present method begins by formally defining the problem of biased quantiles. To simplify the notation, the present disclosure is presented in terms of low-biased quantiles; high-biased quantiles can be obtained via symmetry, by reversing the ordering relation.

Definition 1: Let a be a sequence of n items, and let A be the sorted version of a. Let $\phi$ be a parameter in the range $o < \phi < 1$. The low-biased quantiles of a are the set of values $A[[\phi^j n]]$ for $j = 1, ..., \log_{1/\phi} n$.

Sometimes one may not require the full set of biased-quantiles, and instead only searches for the first $k$. The present algorithms will take $k$ as a parameter.

It is well known that computing quantiles exactly requires space linear in n. In contrast, the present method seeks solutions that are significantly sublinear in $n$, preferably depending on log $n$ or small polynomials in this quantity. Therefore, the present method will allow approximation of the quantiles, by giving a small range of tolerance around the answer.

Definition 2: Let $\phi$ be a parameter in the range $0 < \phi < 1$ supplied in advance. The approximate low-biased quantiles of a sequence of $n$ items, $a$, is a set of $k$ items $q_1,...,q_k$ which satisfy

$$A[\lfloor (1 - \epsilon)\phi^j n \rfloor] \leq q_j \leq A[\lceil (1 + \epsilon)\phi^j n \rceil].$$

In fact, one can solve a slightly more general problem: after processing the input, then for any supplied value $\phi' \leq \phi^k$, one will be able to return an $\varepsilon$-approximate quantile $q'$ that satisfies

$$A[\lfloor (1-\varepsilon)\phi'n \rfloor] \leq q' \leq A[\lceil (1+\varepsilon)\phi'n \rceil]$$

Any such solution clearly can be used to compute a set of approximate low-biased quantiles.

The present method keeps information about particular items from the input, and also stores some additional tracking information. The intuition for this method is as follows: suppose we have kept enough information so that the median can be estimated with an absolute error of $\in n$ in rank. Now suppose that there are so many insertions of items above the median that this item is now the first quartile (the item which occurs 1/4 through the sorted order). For this to happen, then the current number of items must be at least $2n$. Hence, if the same absolute uncertainty of en is maintained, then this corresponds to a relative error of at most $.5 \in$. This shows that we will be able to support greater accuracy for the high-biased·quantiles provided we manage the data structure correctly.

The term "item" may encompass various types of data. For example, each item could be related to a tuple, where each tuple could be related to a round trip time of a packet in an IP data stream. However, this is only an exemplary illustration and should not be interpreted as a limitation of the present invention.

The data structure at time $n$, $S(n)$, consists of a sequence of $s$ tuples ($t_i = (v_i, g_i, \Delta_i)$), where each $v_i$ is a sampled item from the data stream and two additional values are kept: (1) $g_i$ is the difference between the lowest possible rank of item $i$ and the lowest possible rank of item $i$ - 1; and (2) $\Delta_i$ is the difference between the greatest possible rank of item

$i$ and the lowest possible rank of item $i$. The total space used is therefore $O(s)$. For each entry $v_i$, let $\quad r_i = \sum_{j=1}^{i-1} g_j \,.$

Hence, the true rank of $v_i$ is bounded below by $r_i + g_i$ and above by $r_i + g_i + \Delta_i$. $r_i$ can be thought of as an overly conservative bound on the rank of the item $v_i$: it is overtight to make the accuracy guarantees later.

Depending on the problem being solved (uniform, biased, or targeted quantiles), the present method will maintain an appropriate restriction on $g_i + \Delta_i$. We will denote this with a function $f(r_i, n)$, which for the current values of $r_i$ and $n$ gives an upper bound on the permitted value of $g_i + \Delta_i$. For biased quantiles, this invariant is:

Definition 3: (Biased Quantiles Invariant) We set $f(r_i, n) = \max\{\lfloor 2\varepsilon r_i \rfloor, 1\}$. Hence, we ensure that $g_i + \Delta_i \leq \lfloor 2\varepsilon r_i \rfloor$ for all $i$.

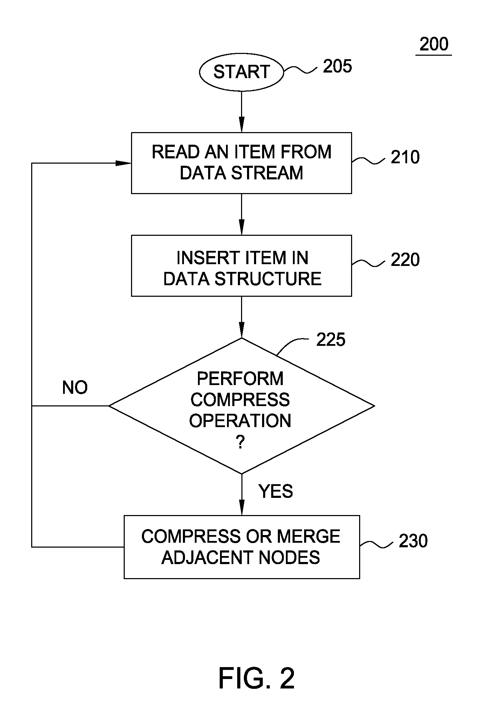

As each item is read, an entry is created in the data structure for it Periodically, the data structure is "pruned" of unnecessary entries to limit its size. We ensure that the invariant is maintained at all times, which is necessary to show that the present method operates correctly. The operations are defined in FIG. 2 below.

FIG. 2 illustrates a method 200 for computing a biased quantile. Method 200 starts in step 205 and proceeds to step 210.

In step 210, method 200 reads an item $v$, e.g., an item from a data stream, into an entry of a data structure.

In step 220, method 200 inserts the newly read item into the data structure. Specifically, to insert a new item, $v$, we find $i$ such that $v_i < v \leq v_{i+1}$, we compute $r_i$ and insert the tuple ($v$, $g = 1$, $\Delta = f(r_i, n) - 1$). This gives the correct settings to g and $\Delta$ since the rank of $v$ must be at least 1 more than the rank of $v_i$, and (assuming the invariant holds before the insertion), the uncertainty in the rank of $v$ is at most one less than the uncertainty of $v_i$ (= $\Delta_i$), which is itself bounded by $f(r_i, n)$ (since $\Delta_i$ is always an integer). We also ensure that min and max are kept exactly, so when $v < v_i$, we insert the tuple ($v$, $g = 1$, $\Delta = 0$) before $v_i$. Similarly, when $v > v_s$, we insert ($v$, $g = 1$, $\Delta = 0$) after $v_s$. To simplify presentation of the algorithms, we add sentinel values ($v_0 = -\infty$, $g = 0$, $\Delta = 0$) and ($V_{s+1} = +\infty$, $g = 0$, $\Delta = 0$).

Once the item is inserted into the data structure, method 200 proceeds to step 225 to determine whether a compress operation is to be performed. If the query is negatively answered, then method 200 proceeds to step 210 and reads the next item. If the query is positively answered, then method proceeds to step 225. It should be noted that the present method performs a compress function on the growing data structure periodically in accordance with a predefined period. This predefined time period is configurable in accordance with the requirement of a particular implementation.

In step 225, method 200 compresses the data structure. Specifically, the present method will periodically scan the data structure and merges adjacent nodes or entries in the data structure when this compress function does not violate the invariant. That is; remove nodes ($v_i$, $g_i$, $\Delta_i$) and ($v_{i+1}$, $g_{i+1}$, $\Delta_{i+1}$) and replace with ($v_{i+1}$, ($g_i + g_{i+1}$), $+ \Delta_{i+1}$) provided that ($g_i + g_{i+1} + \Delta_{i+1}$) $\leq f(r_i, n)$. This also maintains the semantics of g and $\Delta$ being the difference in rank between $v_i$ and $v_{i-1}$, and the difference between the highest and lowest possible ranks-of $v_i$, respectively. Once the compress function is finished, method 200 returns to step 210.

Since the data structure is constantly being updated, one can compute a quantile from the data structure by inputting a $\phi$. Namely, given a value $0 \leq \phi \leq 1$, let i be the smallest index so that $r_i + g_i + \Delta_i > \phi n + 1/2f(\phi n, n)$. Output $v_{i-1}$ as the approximated quantile.

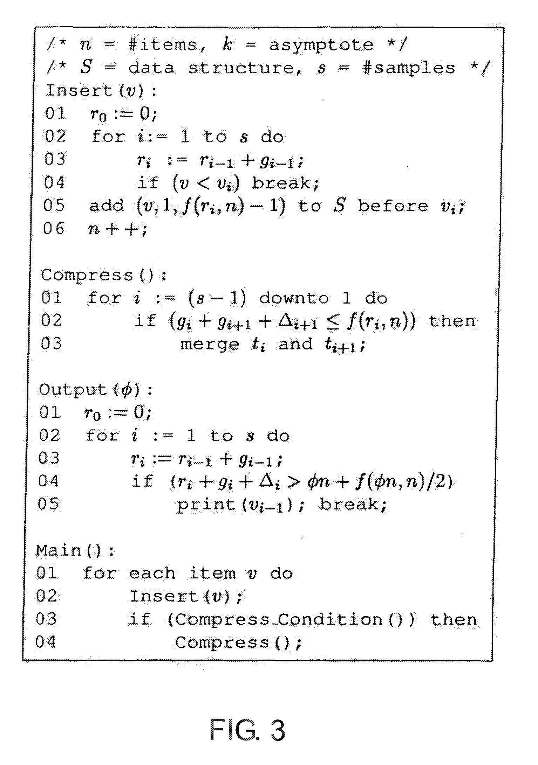

The above routines are the same for the different problems we consider, being parametrized by the setting of the invariant function $f$. Figure 3 presents the pseudocode of the present method for computing biased quantiles.

The method of Figure 3 can be demonstrated that it correctly maintains $\varepsilon$-approximate biased quantiles. First, observe that the "Insert" step maintains the invariant since, for the inserted tuple, clearly $g + \Delta \leq 2\in r_i$. All tuples below the inserted tuple are unaffected; for tuples above the inserted tuple, their $g_i + \Delta_i$ remains the same, but their $r_i$ increases by 1, and so the invariant still holds. The "Compress" step checks that the invariant is not violated by its merge operations, and for tuples not merged, their $r_i$ is unaffected, so the invariant must be preserved.

Next, we demonstrate that any algorithm which maintains the biased quantiles invariant guarantees that the output function will correctly approximate biased quantiles. Because $i$ is the smallest index so that $r_i + g_i + \Delta_i > \phi n + f(\phi n, n)/2 = \phi n + \epsilon \phi n$, then $r_{i-1} + g_{i-1} + \Delta_{i-1} \le (1+\epsilon) \phi n$. Using the invariant, then $(1 + 2\epsilon)r_i > (1 +\epsilon )\phi n$ and consequently $r_i > (1 - \epsilon) \phi n$. Hence $(1 - \epsilon)\phi n < r_{i-1} + g_{i-1} \le r_{i-1} + g_{i-1} + \Delta_{i-1} \le (1 + \epsilon)\phi n$. Recall that the true rank of $v_i$ is between $r_i + g_i$ and $r_i + g_i + \Delta_i$: so the derived inequality means that $v_{i-1}$ is within the necessary error bounds for biased quantiles.

This gives an error bound of $\pm \epsilon \phi n$ for every value of $\phi$. In some cases we have a lower bound on how precisely we need to know the biased quantiles: this is when we only require the first $k$ biased quantiles. It corresponds to a lower bound on the allowed error of $\epsilon \phi^k n$. Clearly we could use the above algorithm which gives stronger error bounds for some items, but this may be inefficient in terms of space. Instead, we modify the invariant as follows to avoid this slackness and so reduce the space needed. The algorithm is identical to before but we modify the invariant to be $f(r_i, n) = 2\epsilon \ max\{r_i, \phi^k n, 1/2\epsilon\}$. This invariant is preserved by the Insert and Compress steps. The Output function can be proved to correctly compute biased quantiles with this lower bound on the approximation error using straightforward modification of the above proof.

The worst case space requirement for finding biased quantiles should

$$\text{be } O\left(\frac{k \log 1/\phi}{\varepsilon} \log \varepsilon n\right).$$

Consider the space used by the algorithm to maintain the biased quantiles for the values whose rank is between $n/2$ and $n$. Here we maintain a synopsis where the error is bounded below by en. So the space required to maintain this region of ranks should be bounded by $O(1/\epsilon \ log \epsilon n)$. Similarly for the range of ranks $n/4$ to $n/2$, items are maintained to an error no less than $\epsilon/2$ but we are maintaining a range of at most half as many *ranks.* Thus the space for this should be bounded by the same amount $O(1/\epsilon \ log \ en)$. This argument can be repeated until we reach $n/2^x = \phi^k n$ where the same amount of space suffices to maintain information about ranks up to $\phi^k$ with error $\epsilon \phi^k$. The total amount of space is no more than $O(x/\epsilon \ log \epsilon n) =$

$$O\left(\frac{k \log 1/\phi}{\varepsilon} \log \varepsilon n\right).$$

If $\phi$ is not specified *a priori*, then this bound can be easily rewritten in terms of $k$ and $\epsilon$. Also, we never need $k \log \ 1/\phi$ to be greater than log en, which corresponds to an absolute error of less than 1, so the bound is equivalent to $O(1/\epsilon \ log^2 \epsilon n)$.

We also note the following lower bound for *any* method that finds the biased quantiles.

Theorem 2 Any algorithm that guarantees to find biased quantiles $\phi$ with error at most $\phi \epsilon n$ in rank must store

$$\Omega\left(\frac{1}{\varepsilon} \min\left\{k \log \frac{1}{\phi}, \log(\varepsilon n)\right\}\right)$$

*items.*

Proof: We show that if we query all possible values of $\phi$, there must be at least this many different answers produced. Assume without loss of generality that every item in the input stream is distinct. Consider each item stored by the algorithm. Let the true rank of this item be $R$. This is a good approximate answer for items whose rank is between $R/(1+\epsilon)$ and $R/(1-\epsilon)$. The largest stored item must cover the greatest item from the input, which has rank n, meaning that the lowest rank input item covered by the same stored item has rank no lower than $n(1 - \epsilon)/(1 + \epsilon)$. We can iterate this argument, to show that the $l$th largest stored item covers input items no less than $n(1-\epsilon)/(1 + \epsilon)^l$. This continues until we reach an input item of rank at most $m = n\phi^k$. Below this point, we need only guarantee an error of $\epsilon \phi^k$. By the same covering argument, this requires at least $p = (n\phi^k)/(\epsilon n\phi^k) = 1/\epsilon$ items. Thus we can bound the space for this algorithm as $p + l$, when $n(1 - \epsilon)/(1 + \epsilon)^l \le m$. Then, since $1-\epsilon/1+\epsilon \le (1 - \epsilon)$, we have $ln(m/n) \ge l \ln(1-\epsilon)$. Since $\ln(1- \epsilon) \le -\epsilon$, we find $l \ge 1/\epsilon \ \ln n/m = 1/\epsilon \ \ln n/n\phi^k$. This bounds

$$l = \Omega\left(\frac{k\log 1/\phi}{\varepsilon}\right),$$

and gives the stated space bounds.

Note that it is not meaningful to set $k$ to be too large, since then the error in rank becomes less than 1, which corresponds to knowing the exact rank of the smallest items. That is, we never need to have $\in n\phi^k < 1$; this bounds $k$ log $1/\phi \le$; log (en) and so the space lower bounds translates to

$$\Omega\left(\frac{1}{\varepsilon}\min\{k\log 1/\phi, \log(\varepsilon n)\}\right).$$

The targeted quantiles problem considers the case that we are concerned with an arbitrary set of quantile values with associated error bounds that are supplied in advance. Formally, the problem is as follows:

Definition 4 (Targeted Quantiles Problem) The input is a set of tuples $T = \{(\phi_j, \in_j)\}$. Following a stream of input values, the goal is to return a set of $|T|$ values $v_j$ such that

$$A[\lceil (\phi_j - \epsilon_j)n\rceil] \le v_j \le A[\lceil (\phi_j + \epsilon_j)n\rceil].$$

As in the biased quantiles case, we will maintain a set of items drawn from the input as a data structure, $S(n)$. We will keep tuples $\langle t_i = (v_i, g_i, \Delta_i)\rangle$ as before, but will keep a different constraint on the values of $g_i$ and $\Delta_i$.

Definition 5 (Targeted Quantiles Invariant) We define the invariant function $f(r_i, n)$ as:

$$\text{(i) } f_j(r_i, n) = 2\epsilon_j r_i/\phi_j, \qquad \phi_j n \le r_i \le n;$$

$$\text{(ii) } f_j(r_i, n) = 2\epsilon_j (n-r_i)/(1-\phi_j), \qquad 0 \le r_i \le \phi_j n;$$

and take $f(r_i, n) = \max\{\min_j f_j(r_i, n)_j, 1\}$. As before we ensure that for all i, $g_i + \Delta_i \le f(r_i, n)$.

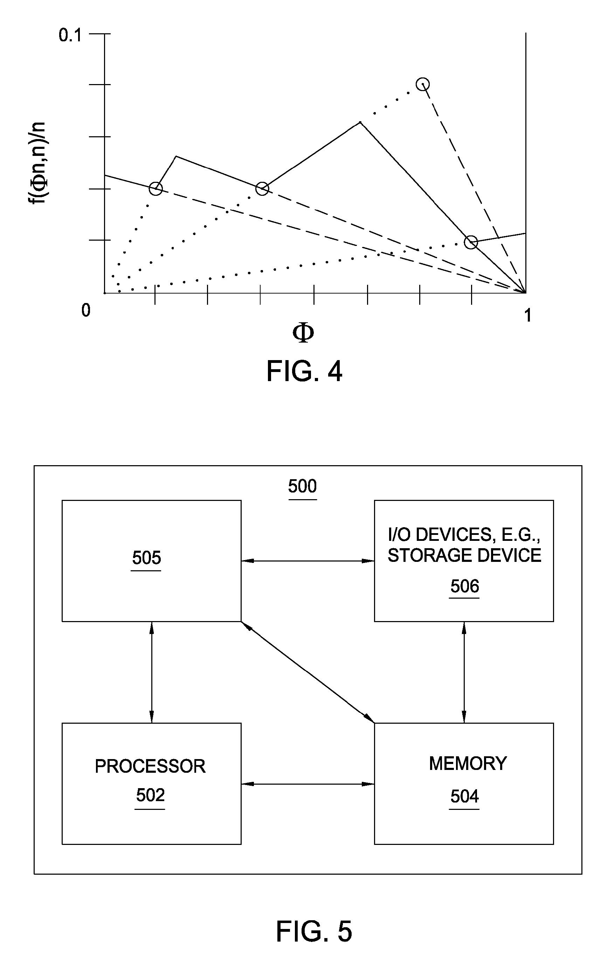

An example invariant f is shown in Figure 4 where we plot f($\phi n$, n) as $\phi$ varies from 0 to 1. Dotted lines extrapolate the constraints of type (i) when $r_i \le \phi_j n$ and constraints of type (ii) when $r_i \ge \phi_j n$, to illustrate how the function is formed. The function $f$ itself is illustrated with a solid line seen as the lower envelope of the $f_j$' s. Note that if we allow T to contain a large number of entries then setting

$$T = \{(\tfrac{1}{n}, \epsilon), (\tfrac{2}{n}, \epsilon), \ldots, (\tfrac{n-1}{n}, \epsilon), (1, \epsilon)\}$$

captures the uniform error approximate quantiles problem. Similarly setting

$$T = \left\{\left(\frac{1}{n}, \frac{\varepsilon}{n}\right), \left(\frac{2}{n}, \frac{2\varepsilon}{n}\right) \ldots \left(\frac{n-1}{n}, \frac{(n-1)\varepsilon}{n}\right), (1, \varepsilon)\right\}$$

captures the biased quantiles problem.

The present invention presents a few alternatives used to gain an understanding of which factors are important for achieving good performance over a data stream. The three alternatives presented below exhibit standard data structure trade-offs, but this list is by no means exhaustive.

The running time of the algorithm to process each new update *v* depends on (i) the data structures used to implement the sorted list of tuples, S, and (ii) the frequency with which Compress is run. The time for each Insert operation is that to find the position of the new data item *v* in the sorted list. With a sensible implementation (e.g., a balanced tree structure), this is O(log s), and with augmentation we can efficiently maintain $r_i$ of each tuple in the same time bounds.

The periodic reduction in size of the quantile summary done by Compress is based on the invariant function f which determines tuples eligible for deletion (that is, merging the tuple into its adjacent tuple). Note that this invariant function can change dynamically when the ranks change; hence, it is not possible to efficiently maintain candidates for compression incrementally. As a consequence, Compress is much simpler to implement since it requires a linear pass over the sorted elements in time *O(s)*. However, instead of periodically performing a full scan, it can be prudent to amortize the time cost and the space used by the algorithm, and thus perform partial scans at higher frequency. This is governed by the function Compress_Condition (), which can be implemented in a variety of ways: it could always return true, or return true every 1/e tuples, or with some other frequency. Note that the frequency of compressing does not affect the correctness, just the aggressiveness with which we prune the data structure.

Three alternatives for maintaining the quantile summary tuples ordered on $v_i$-values in the presence of insertions and deletions are now disclosed.

Batch: This method maintains the tuples of *S(n)* in a linked list. Incoming items are buffered into blocks of size $1/2\epsilon$, sorted, and then batch-merged into S(*n*). Insertions and deletions can be performed in constant time. However, the periodic buffer sort, occurring every $1/2\epsilon$ items, costs $O((1/\epsilon) \log(1/\epsilon))$.

Cursor: This method also maintains tuples of (*n*) in a linked list. Incoming items are buffered in sorted order and are inserted using an insertion cursor which, like the compress cursor, sequentially scans a fraction of the tuples and inserts a buffered item whenever the cursor is at the appropriate position. Maintaining the buffer in sorted order costs $O(\log(1/\epsilon))$ per item.

Tree: This method maintains *S(n)* using a balanced binary tree. Hence, insertions and deletions cost O(log s). In the worst case, all es tuples considered for compression can be deleted, so the cost per item is $O(\epsilon s \log s)$.

FIG. 5 depicts a high-level block diagram of a general-purpose computer suitable for use in performing the functions described herein. As depicted in FIG. 5, the system 500 comprises a processor element 502 (e.g., a CPU), a memory 504, e.g., random access memory (RAM) and/or read only memory (ROM), a module 505 for computing quantiles, and various input/output devices 506 (e.g., storage devices, including but not limited to, a tape drive, a floppy drive, a hard disk drive or a compact disk drive, a receiver, a transmitter, a speaker, a display, a speech synthesizer, an output port, and a user input device (such as a keyboard, a keypad, a mouse, alarm interfaces, power relays and the like)).

It should be noted that the present invention can be implemented in software and/or in a combination of software and hardware, e.g., using application specific integrated circuits (ASIC), a general-purpose computer or any other hardware equivalents. In one embodiment, the present module or process 505 for computing quantiles can be loaded into memory 504 and executed by processor 502 to implement the functions as discussed above. As such, the present method 505 for computing quantiles (including associated data structures) of the present invention can be stored on a computer readable medium or carrier, e.g., RAM memory, magnetic or optical drive or diskette and the like.

While various embodiments have been described above, it should be understood that they have been presented by way of example only, and not limitation. Thus, the breadth and scope of a preferred embodiment should not be limited by any of the above-described exemplary embodiments, but should be defined only in accordance with the following claims and their equivalents.

**Claims**

1. A method for monitoring a data stream, comprising:

   reading a plurality of items from said data stream;
   inserting each of said plurality of items that was read from said data stream into a data structure;
   compressing said data structure periodically; and
   outputting at least one biased or targeted quantile from said data structure.

2. The method of claim 1, wherein said plurality of items comprises a plurality of tuples.

3. The method of claim 2, wherein said plurality tuples is associated with a plurality of Internet Protocol (IP) packets.

4. The method of claim 3, wherein said plurality tuples is associated with a round trip time of said plurality of Internet Protocol (IP) packets.

**5.** The method of claim 1, wherein said data structure comprises a linked list.

**6.** The method of claim 1, wherein said data structure comprises a binary tree.

**7.** The method of claim 1, wherein said at least one biased or targeted quantile is outputted in a single pass.

**8.** The method of claim 1, wherein said at least one biased or targeted quantile is outputted in accordance with a desired error, $\in$.

**9.** A computer-readable medium having stored thereon a plurality of instructions, the plurality of instructions including instructions which, when executed by a processor, cause the processor to perform the steps of a method for monitoring a data stream, comprising:

reading a plurality of items from said data stream;
inserting each of said plurality of items that was read from said data stream into a data structure;
compressing said data structure periodically; and
outputting at least one biased or targeted quantile from said data structure.

**10.** The computer-readable medium of claim 9, wherein said plurality of items comprises a plurality of tuples.

**11.** The computer-readable medium of claim 10, wherein said plurality tuples is associated with a plurality of Internet Protocol (IP) packets.

**12.** The computer-readable medium of claim 11, wherein said plurality tuples is associated with a round trip time of said plurality of Internet Protocol (IP) packets.

**13.** The computer-readable medium of claim 9, wherein said data structure comprises a linked list.

**14.** The computer-readable medium of claim 9, wherein said data structure comprises a binary tree.

**15.** The computer-readable medium of claim 9, wherein said at least one biased or targeted quantile is outputted in a single pass.

**16.** The computer-readable medium of claim 9, wherein said at least one biased or targeted quantile is outputted in accordance with a desired error, $\in$.

**17.** An apparatus for monitoring a data stream, comprising:

means for reading a plurality of items from said data stream;
means for inserting each of said plurality of items that was read from said data stream into a data structure;
means for compressing said data structure periodically; and
means for outputting at least one biased or targeted quantile from said data structure.

**18.** The apparatus of claim 17, wherein said plurality of items comprises a plurality of tuples.

**19.** The apparatus of claim 18, wherein said plurality tuples is associated with a plurality of Internet Protocol (IP) packets.

**20.** The apparatus of claim 19, wherein said plurality tuples is associated with a round trip time of said plurality of Internet Protocol (IP) packets.

| CLIENT OR CUSTOMER EQUIPMENT 110a | ←→ | ACCESS NETWORK 120a | ←→ | INTERNET 130 | ←→ | ACCESS NETWORK 120b | ←→ | CLIENT OR CUSTOMER EQUIPMENT 110b |

NETWORK OR DATA STREAM MONITORING DEVICE 140

FIG. 1

EP 1 667 363 A1

200

START ~ 205

READ AN ITEM FROM DATA STREAM ~ 210

INSERT ITEM IN DATA STRUCTURE ~ 220

225

PERFORM COMPRESS OPERATION ?

NO

YES

COMPRESS OR MERGE ADJACENT NODES ~ 230

FIG. 2

```
/* n = #items, k = asymptote */
/* S = data structure, s = #samples */
Insert (v) :
01   r_0 := 0;
02   for i := 1 to s do
03        r_i := r_{i-1} + g_{i-1};
04        if (v < v_i) break;
05   add (v, 1, f(r_i, n) - 1) to S before v_i;
06   n++;


Compress () :
01   for i := (s - 1) downto 1 do
02        if (g_i + g_{i+1} + Δ_{i+1} ≤ f(r_i, n)) then
03             merge t_i and t_{i+1};


Output (φ) :
01   r_0 := 0;
02   for i := 1 to s do
03        r_i := r_{i-1} + g_{i-1};
04        if (r_i + g_i + Δ_i > φn + f(φn, n)/2)
05             print (v_{i-1}); break;


Main () :
01   for each item v do
02        Insert (v);
03        if (Compress_Condition ()) then
04             Compress ();
```

# FIG. 3

FIG. 4

FIG. 5

**European Patent Office**

## EUROPEAN SEARCH REPORT

Application Number

EP 05 11 1665

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 6 807 156 B1 (VERES ANDRAS ET AL) 19 October 2004 (2004-10-19) * the whole document * ----- | 1-20 | H04L12/26 |
| Y | M. GREENWALD, S. KHANNA: "Space-Efficient Online Computation of Quantile Summaries" ACM SIGMOD 2001, [Online] 24 May 2001 (2001-05-24), pages 58-66, XP002369178 Santa Barbara, CA, USA Retrieved from the Internet: URL:http://hake.stanford.edu/~datar/course s/cs361a/papers/quantiles.pdf> [retrieved on 2006-02-22] * the whole document * ----- | 1-20 | |

TECHNICAL FIELDS SEARCHED (IPC)

H04L

The present search report has been drawn up for all claims

| Place of search | Date of completion of the search | Examiner |
|---|---|---|
| The Hague | 22 February 2006 | Mannekens, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 11 1665

This annex lists the patent family members relating to the patent documents cited in the above-mentioned European search report.
The members are as contained in the European Patent Office EDP file on
The European Patent Office is in no way liable for these particulars which are merely given for the purpose of information.

22-02-2006

| Patent document cited in search report | | Publication date | Patent family member(s) | | Publication date |
|---|---|---|---|---|---|
| US 6807156 | B1 | 19-10-2004 | AU | 1291002 A | 21-05-2002 |
| | | | EP | 1332584 A1 | 06-08-2003 |
| | | | WO | 0239673 A1 | 16-05-2002 |
| | | | TW | 536890 B | 11-06-2003 |